# EUROPEAN PATENT SPECIFICATION

(11) **EP 2 161 503 B1**
(45) Date of publication and mention of the grant of the patent: **19.12.2018**
(21) Application number: 09009720.5
(22) Date of filing: 28.07.2009
(51) Int. Cl.: F24C 3/08, F24C 15/22, F24C 15/24

(54) **Reflector and gas oven range comprising the same**
Reflektor und Gasherd, der diesen umfasst
Réflecteur et four à gaz le comportant

(30) Priority: 28.07.2008 KR 20080073540
(43) Date of publication of application: 10.03.2010
(73) Proprietor: LG Electronics Inc., Yeongdeungpo-gu Seoul, 07336 (KR)
(72) Inventor: Ye, Jin Hae, Gyoungsangnam-do, 641-711 (KR); Yang, Dae Bong, Gyoungsangnam-do, 641-711 (KR); Wie, Jea Hyuk, Gyoungsangnam-do, 641-711 (KR); Jeong, Yong Ki, Gyoungsangnam-do, 641-711 (KR); Kim, Yang Ho, Gyoungsangnam-do, 641-711 (KR); Seok, Jun Ho, Gyoungsangnam-do, 641-711 (KR); Kim, Young Soo, Gyoungsangnam-do, 641-711 (KR); Ryu, Jung Wan, Gyoungsangnam-do, 641-711 (KR); Lim, Jae Beom, Gyoungsangnam-do, 641-711 (KR)
(74) Representative: Ter Meer Steinmeister & Partner

(56) References cited:
- EP-A1- 1 111 309
- DE-B- 1 137 847
- GB-A- 1 067 933
- JP-U- S5 332 670
- KR-B1- 100 343 985
- US-A- 2 164 079
- US-A- 2 415 223
- US-A- 2 668 527
- US-A- 3 357 475
- US-A- 5 078 121
- US-A- 5 101 805
- US-A- 5 473 980
- US-A1- 2006 048 769

## Description

### BACKGROUND

The present invention relates to a cooking device, and more particularly, to a gas oven range including a reflector and to a reflector configured to reflect heat generated from a burner.

Gas oven ranges are used for cooking foods using a gaseous fuel. Such a gas oven range includes an oven chamber in which food is cooked, and a burner configured to burn a gaseous fuel for cooking food accommodated in the oven chamber. The burner can be installed on the ceiling of the oven chamber for generating a flame by burning a gaseous fuel and heat food placed in the oven chamber by radiant heat from the flame.
US 5,078,121 A discloses a device for adjusting a reflecting angles of a grill, reflecting plate in a gas oven range including a casing, an oven room for objects for cooking, upper and lower grill burners disposed in said oven room, and two or more grill reflecting plates constituting a pair of wings and hingedly mounted on the ceiling of said oven room by a common hinge pin.
DE 11 37 847 shows a grill oven having an oven chamber, burners and a reflector disposed above the burners, comprising holes which allow combustion gas to pass through. EP 1 111 309 A1 discloses a gas oven comprising a muffle, which comprises a cavity, a combustion chamber comprising a burner, wherein the oven comprises an intermediate cover comprising at least one perforated area situated opposite a perforated area of a bottom wall of the muffle. The holes of the perforated area of the intermediate cover are located opposite to the holes of the perforated area of the muffle, and are concentrically aligned with them, wherein the ratio between the sizes of the two sets of holes and the distance between the two perforated areas is chosen so that the combustion products coming from the burner pass through the hole without coming into contact with the bottom wall of the muffle.

DE 1 137 847 B1 discloses a gas oven range comprising an oven chamber and a reflector according to the preamble of claims 1 and 3.

### SUMMARY

The object of the present invention is to provide a gas oven range having an improved gas combusting efficiency of a burner. during cooking

Another object of the present invention is to provide a reflector configured to efficiently transfer heat generated by combustion of gas at a burner to food in an oven chamber of a gas oven range.

According to the present invention, a gas oven range preferably includes: an oven chamber in which food is cooked; a burner inside the oven chamber; and a reflector configured to reflect flame and heat generated by combustion of gas at the burner. In particular the reflector is installed between the ceiling of the oven chamber and the burner to reflect the flame generated when a gaseous fuel is burned at the burner toward the inside of the oven chamber, i.e. toward food placed therein to be cooked. The reflector divides the oven chamber into a combustion space in which gas is burned by the burner and an exhaust space to which combustion gas generated by combustion of gas at the burner is discharged.

A reflector includes: a reflection part configured to reflect flame and heat generated by combustion of gas at a burner; and an exhaust hole configured to discharge combustion gas generated by combustion of gas at the burner toward a side opposite to the burner. To install the reflector within an oven chamber of a gas oven range a fixing flange is provided that is configured to fix the reflection part to an oven chamber.

Further the reflector for reflecting flame and heat generated by combustion of gas at a burner disposed at an oven chamber includes a structure for preventing flame and heat generated by combustion of gas at the burner from leaking upward through gaps between both lateral end portions of the reflector and lateral surfaces of the oven chamber.

The reflector further includes compartment parts extending from both sides of the reflection part to positions close to or contacting lateral surfaces of the oven chamber. The compartment parts being configured to prevent flame and heat of the burner from leaking to a side opposite to the burner through gaps between lateral end portions of the compartment parts and the lateral surfaces of the oven chamber.

The details of one or more embodiments are set forth in the accompanying drawings and the description below. Other features will be apparent from the description and drawings, and from the claims.

### BRIEF DESCRIPTION OF THE DRAWINGS

Fig. 1 is a perspective view illustrating a gas oven range according to a first embodiment.
Fig. 2 is an exploded perspective view illustrating an upper burner and a reflector according to the first embodiment.
Fig. 3 is a vertical sectional view illustrating reflection of flames and exhaustion of combustion gas at the reflector according to the first embodiment.
Fig. 4 is a perspective view illustrating an upper burner and a reflector of a gas oven range according to a second embodiment.
Fig. 5 is a perspective view illustrating an upper burner and a reflector of a gas oven range according to a third embodiment.
Fig. 6 is a vertical sectional view illustrating reflection of flames and exhaustion of combustion gas at the reflector according to the third embodiment.
Fig. 7 is a perspective view illustrating an upper burner and a reflector of a gas oven range according to a fourth second embodiment.

### DETAILED DESCRIPTION OF THE EMBODIMENTS

Hereinafter, a reflector and a gas oven range including the reflector will be explained in detail with reference to the accompanying drawings according to a first embodiment.

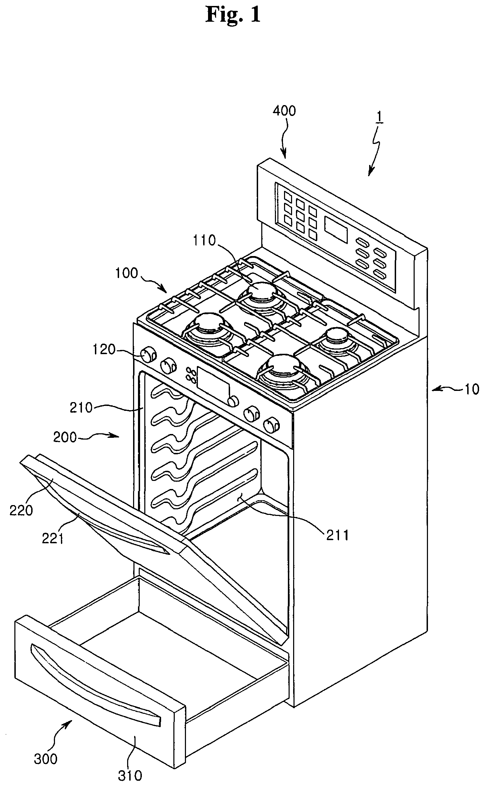

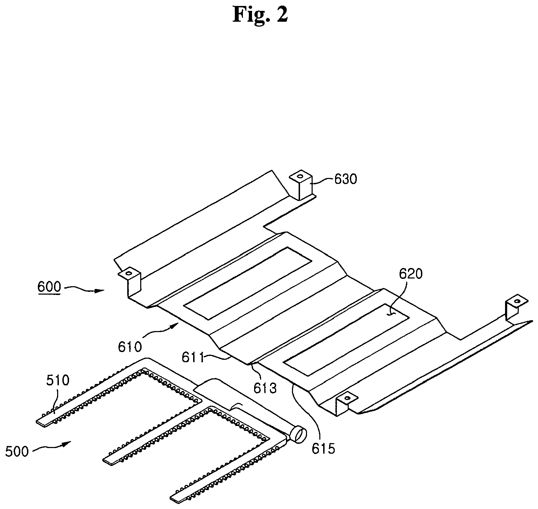

Fig. 1 is a perspective view illustrating a gas oven range 1 according to a first embodiment, and Fig. 2 is an exploded perspective view illustrating an upper burner 500 and a reflector 600 according to the first embodiment.

Referring to Fig. 1, the oven range 1 includes a cook top part 100, an oven part 200, a drawer part 300, and a control part 400. The cook top part 100, the oven part 200, and the drawer part 300 are disposed at upper, middle, and lower regions of a main body 10 of the oven range 1, respectively. The control part 400 is disposed on the top of the main body 10 at a rear edge portion corresponding to a rear side of the cook top part 100.

In more detail, the cook top part 100 includes a plurality of cook-top burners 110. Each of the cook-top burners 110 can generate a flame by burning a gaseous fuel to directly heat a container in which food is placed. A plurality of knobs 120 are disposed on a front end portion of the cook top part 100. The knobs 120 are used to close, open, or adjust valves (not shown) for starting, stopping, or adjusting supply of a gaseous fuel to the cook-top burners 110.

The oven part 200 includes an oven cavity 210 provided inside the main body 10. An oven chamber 211 is provided in the oven cavity 210. In the oven chamber 211, food is cooked. A burner chamber (not shown) is provided in the oven cavity 210 under the oven chamber 211 to install a lower burner (not shown).

The oven chamber 211 can be selectively closed and opened by using an oven door 220. The oven door 220 is a pull-down door of which the top end can be rotated up and down about the lower end. A door handle 221 is provided on a front upper portion of the oven door 220 so that a user can easily rotate the oven door 220 using the door handle 221.

A container in which food is contained can be stored in the drawer part 300 at a predetermined temperature. The drawer part 300 includes a drawer 310 in which a container can be placed.

A manipulation signal can be input (generated) through the control part 400 for operating the oven range 1, specifically, at least one of the cook top part 100, the oven part 200, and the drawer part 300. In addition, the control part 400 displays information about operational conditions of the oven range 1.

Fig. 2 shows the upper burner 500 that is disposed at an upper side of the oven chamber 211. The upper burner 500 is used to burn a gaseous fuel to directly heat food placed in the oven chamber 211 by radiant heat from above. In the current embodiment, the upper burner 500 includes three combustion parts 510 that have a fork shape elongated in a left-to-right direction (not shown) or preferably in a front-to-back direction of the oven chamber 211.

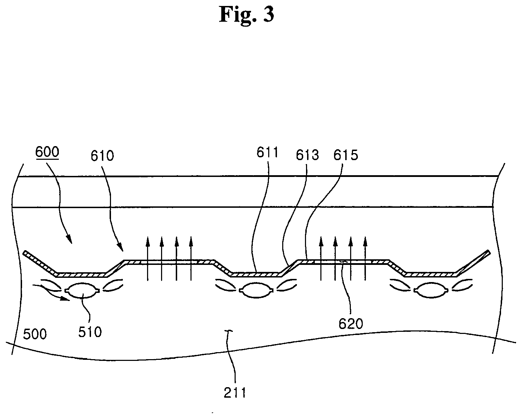

Referring to Figs. 2 and 3, the reflector 600 includes a reflection part 610, exhaust holes 620, and fixing flanges 630. The reflector 600 is disposed between the ceiling of the oven chamber 211 and the upper burner 500. When a gaseous fuel is burned at the upper burner 500, the reflector 600 reflects heat from flames downwardly toward food placed in the oven chamber 211. In addition, when a gaseous fuel is burned at the upper burner 500, combustion gas is guided by the reflector 600 to a space above the reflector 600, that is, between the ceiling of the oven chamber 211 and the reflector 600.

Flames and heat generated from the upper burner 500 are guided and reflected toward food placed in the oven chamber 211 substantially by the reflection part 610. The reflection part 610 is formed by bending a plate having a predetermined area in an approximate W-shape (cross sectional shape). In more detail, the reflection part 610 includes a plurality of first connection parts 611, oblique parts 613, and second connection parts 615.

Each of the first connection parts 611 has a predetermined lateral width and is located directly above the combustion part 510 in parallel with the combustion part 510.The number of the first connection parts 611 is determined according to the number of the combustion parts 510. The oblique parts 613 are sloped upwardly from both sides of the first connection part 611 at a predetermined angle. The second connection part 615 is disposed between neighboring two of the oblique parts 613 to connect ends of the oblique parts 613. When a gaseous fuel is burned at the upper burner 500, combustion gas is collected in a space formed by the second connection part 615 and two oblique parts 613 connected to the second connection part 615, and then discharged through the exhaust holes 620.

The fixing flanges 630 are disposed on corners of the top surface of the reflection part 610. The fixing flanges 630 are used to fix the reflection part 610 to the ceiling of the oven chamber 211. The fixing flanges 630 may be formed at the corners of the reflection part 610 by cutting and upwardly bending the first connection parts 611 and the oblique parts 613.

When a gaseous fuel is burned at the upper burner 500, combustion gas is collected between the upper burner 500 and the reflection part 610, that is, in spaces formed by the second connection part 615 and the oblique parts 613 connected to the second connection part 615. Then, the combustion gas is discharged to a space between the ceiling of the oven chamber 211 and the reflection part 610 through the exhaust holes 620. For this end, the exhaust holes 620 are formed into an elongated shape by partially cutting out the second connection parts 615 in longitudinal direction thereof, i.e. in the preferred embodiment ia a front-to-back direction.

Operations of the reflector 600 and the oven range 1 including the reflector 600 will now be described with reference to the accompanying drawings according to the first embodiment.

Fig. 3 is a vertical sectional view illustrating reflection of flames and exhaustion of combustion gas at the reflector 600 according to the first embodiment.

A user can input a manipulation signal by using the control part 400 for cooking food using the oven part 200. If a manipulation signal is input through the control part 400, the upper burner 500 (and the lower burner) is operated to cook food in the oven chamber 211.

In detail, gas and air are supplied to the upper burner 500, and flames are generated by combustion of the gas and air. Then, food is cooked in the oven chamber 211 by flames and heat generated at the upper burner 500. At this time, the reflector 600 guides flames and reflects heat generated by combustion of gas at the upper burner 500 toward the food placed in the oven chamber 211. Thus, the reflector 600 reflects the heat radiated upwardly from the flames back the food located below the burner. In addition, since the reflector 600 guides and reflects the flames, it is heated by the flames directly and by the hot combustion gas. Therefore the reflector 600 also radiates heat toward to the food.

Meanwhile, combustion gas generated as a result of combustion of gas at the upper burner 500 is guided to the space between the ceiling of the oven chamber 211 and the reflector 600 through the reflector 600. In more detail, the combustion gas is collected at the space formed by the second connection part 615 and two oblique parts 613 connected to the second connection part 615. Then, the collected combustion gas flows upward, that is, to the space between the ceiling of the oven chamber 211 and the reflection part 610 through the exhaust hole 620.

Therefore, when flames and heat generated by the upper burner 500 are reflected by the reflection part 610 toward food placed in the oven chamber 211, incomplete combustion of gas at the upper burner 500 can be prevented, which may caused by combustion gas generated by combustion of the gas. Therefore, food placed in the oven chamber 211 can be cooked more efficiently by the upper burner 500, and incomplete combustion at the upper burner 500, which may result in harmful gases such as carbon monoxide, can be prevented.

Hereinafter, another reflector and a gas oven range including such reflector will be explained in detail with reference to the accompanying drawings according to a second embodiment.

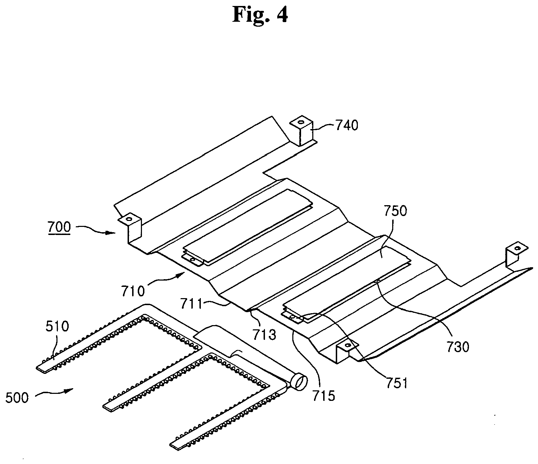

Fig. 4 is an exploded perspective view illustrating the upper burner 500 and a reflector 700 of a gas oven range according to a second embodiment.

Referring to Fig. 4, in the current embodiment, the reflector 700 includes a reflection part 710, exhaust holes 730, fixing flanges 740, and cover parts 750. The reflection part 710 includes a plurality of first connection parts 711, oblique parts 713, and second connection parts 715.

That is, in the current embodiment, the reflector 700 further includes cover parts 750 as compared with the previous embodiment. The cover parts 750 are provided so that flames and heat generated by combustion of gas at the upper burner 500 can be prevented from flowing through the exhaust holes 730 to a space between the top surface of the reflector 700 and the ceiling of the oven chamber 211 (refer to Fig. 1). Furthermore, owing to the cover parts 750, combustion gas generated by combustion of gas at the upper burner 500 can be uniformly distributed through the space between the top surface of the reflector 700 and the ceiling of the oven chamber 211.

The cover parts 750 have a plate shape with a size corresponding to the size of the exhaust holes 730. The cover parts 750 are disposed directly above the exhaust holes 730. Owing to this structure, flames and heat generated by combustion of gas at the upper burner 500 are not transferred through the exhaust holes 730 to the space between the top surface of the reflector 700 and the ceiling of the oven chamber 211 but are reflected by the cover parts 750 downwardly toward the inside of the oven chamber 211. In addition, combustion gas discharged through the exhaust holes 730 can be uniformly distributed forward, backward, leftward, and/or rightward by the cover parts 750.

Fixing ribs 751 are provided at front and rear end portions of each cover part 750. The fixing ribs 751 are provided to fix the cover part 750 to the reflection part 710. In the current embodiment, the fixing ribs 751 have an approximate L-shape and disposed at the front and rear end portions of each cover part 750. For example, the fixing ribs 751 and the cover part 750 may be formed in one piece. Furthermore, the cover part 750 and the reflector 700 may be formed in one piece. In this case, the exhaust hole 730 and the cover part 750 may be formed by forming two parallel lines in the second connection part 715 by cutting the second connection part 715 in the length direction of the second connection part 715, and upwardly bending a portion of the second connection part 715 disposed between the parallel lines.

Hereinafter, another reflector and a gas oven range including the reflector will be explained in detail with reference to the accompanying drawings according to a third embodiment.

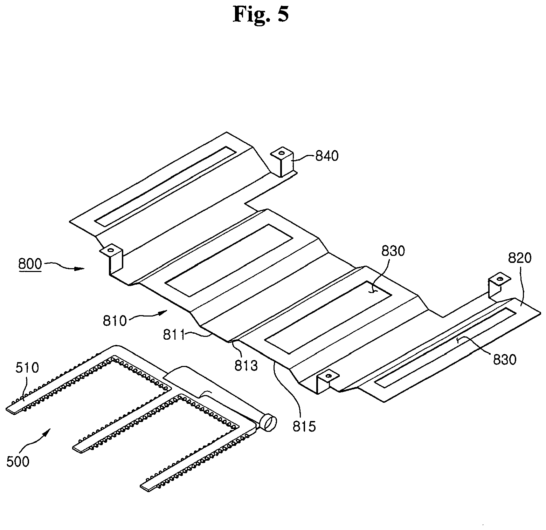

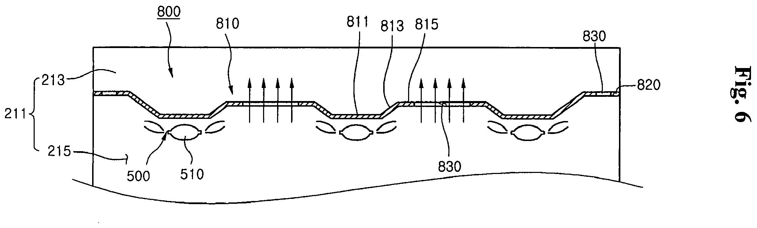

Fig. 5 is an exploded perspective view illustrating the upper burner 500 and the reflector 800 of the gas oven range according to a third embodiment, and Fig. 6 is a vertical sectional view illustrating reflection of flames and exhaustion of combustion gas at the reflector 800 according to the third embodiment.

Referring to Figs. 5 and 6, in the current embodiment, the reflector 800 includes a reflection part 810, compartment parts 820, exhaust holes 830, and fixing flanges 840. The reflection part 810 includes a plurality of first connection parts 811, oblique parts 813, and second connection parts 815.

That is, in the current embodiment, the reflector 800 further includes the compartment parts 820 as compared with the first and second embodiments. The compartment parts 820 are disposed between lateral surfaces of the oven chamber 211 and lateral end portions of the reflector 800 for more complete compartment. In other words, substantially, the oven chamber 211 is divided into a combustion space 215 and an exhaust space 213 by the reflector 800. For this end, the compartment parts 820 are provided on both sides of the reflector 800, that is, outer end portions of the oblique parts 813 of the reflection part 810. In more detail, the compartment parts 820 extend outward from the outer end portions of the oblique parts 813 toward the lateral surfaces of the oven chamber 211. Outer end portions of the compartment parts 820 are placed close to the lateral surfaces of the oven chamber 211, respectively. The distance between the outer end portions of the compartment parts 820 and the lateral surfaces of the oven chamber 211 may be at least smaller than the width of the exhaust holes 830. Therefore, the combustion space 215 is formed by the lateral, rear, and bottom surfaces of the oven chamber 211 and the bottom surfaces of the reflector 800, and the exhaust space 213 is formed by the lateral, rear, and ceiling surfaces of the oven chamber 211 and the top surface of the reflector 800.

The exhaust holes 830 are formed in the reflection part 810, specifically, in the second connection parts and the compartment parts 820. Combustion gas generated as a result of combustion of gas at the upper burner 500 is colleted between the upper burner 500 and the reflector 800, that is, at a space formed by the second connection part 815 and two oblique parts 813 connected to the second connection part 815, and then the combustion gas is discharged to the exhaust space 213 through the exhaust hole 830. For this end, the exhaust holes 620 are formed into an elongated shape by partially cutting out the second connection parts 815 and the compartment parts 820 of the reflection part 810 in a longitudinal direction thereof, i.e. in the preferred embodiment in a front-to-back direction.

In the current embodiment, the reflection part 810 and the fixing flanges 840 of the reflector 800 have the same structures as those explained in the first and second embodiments. Thus, descriptions thereof will be omitted.

Hereinafter, another reflector and a gas oven range including the reflector will be explained in detail with reference to the accompanying drawings according to a third embodiment.

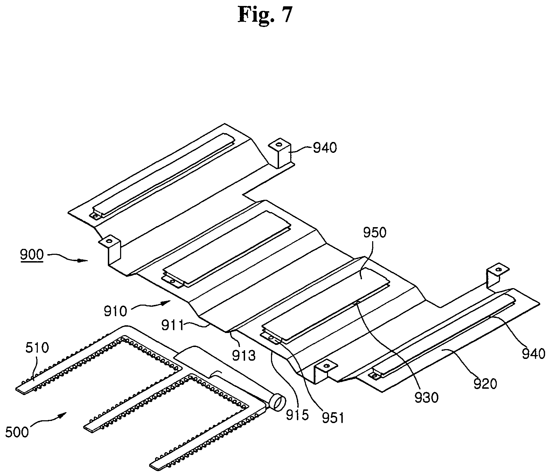

Fig. 7 is a perspective view illustrating the upper burner 500 and the reflector 900 of the gas oven range according to a fourth second embodiment.

Referring to Fig. 7, in the current embodiment, the reflector 900 includes a reflection part 910, compartment parts 920, exhaust holes 930, fixing flanges 940, and cover parts 950. The reflection part 910 includes a plurality of first connection parts 911, oblique parts 913, and second connection parts 915.

That is, in the current embodiment, the reflector 900 further includes the cover parts 950 as compared with the third embodiment. The cover parts 950 are provided so that flames and heat, in particular radiant heat generated by combustion of gas at the upper burner 500 can be prevented from flowing from a lower side of the reflector 900 (that is, the combustion space 215) to a space (the exhaust space 213) formed between the top surface of the reflector 900 and the ceiling of the oven chamber 211 (refer to Fig. 3). Furthermore, owing to the cover parts 950, combustion gas generated by combustion of gas at the upper burner 500 can be uniformly distributed throughout the exhaust space 213.

The cover parts 950 have a plate shape with a size corresponding to the size of the exhaust holes 930. The cover parts 950 are disposed directly above the exhaust holes 930. Owing to this structure, flames and heat generated by combustion of gas at the upper burner 500 are not transferred through the exhaust holes 930 to the upper side of the reflector 900 (that is, the exhaust space 213) but are reflected by the reflector 900 toward the lower side of the reflector 900 (that is, the combustion space 215). In addition, combustion gas discharged through the exhaust holes 930 can be uniformly distributed by the cover parts 950 forward, backward, leftward, and/or rightward inside the exhaust space 213.

In the current embodiment, the reflection part 910 and the fixing flanges 940 of the reflector 900 have the same structures as those explained in the first and second embodiments. Thus, descriptions thereof will be omitted.

According to the embodiments, incomplete combustion of gas at the burner can be prevented, and food can be efficiently cooked by heat generated by combustion of gas at the burner.

As described above, the reflector and the gas oven range including the reflector can provide the following effects.

According to the embodiments of the present disclosure, combustion gas generated by combustion of gas at the upper burner is discharged to the space between the top surface of the reflector and the ceiling of the oven chamber through the exhaust holes of the reflector. Therefore, incomplete combustion at the upper burner can be prevented, and thus efficiency decrease and generation of harmful gases can be prevented.

In addition, according to the present disclosure, flames and heat generated by combustion of gas at the upper burner are not transferred to the space between the top surface of the reflector and the ceiling of the oven chamber through the exhaust holes of the reflector. Therefore, food can be cooked in the oven chamber more efficiently.

## Claims

1. A gas oven range comprising:
an oven chamber (211) in which food is cooked;
an upper burner (500) inside the oven chamber (211); and
a reflector (600; 700; 800; 900) disposed above the burner (500);
the reflector comprising
a reflection part (610; 710; 810; 910) configured to reflect flame and heat generated by combustion of gas at the burner (500), and
an exhaust hole (620; 730; 830; 930) configured to discharge combustion gas generated by combustion of gas at the burner (500) toward a side opposite to the burner (500);
**characterized by**
a cover part (750; 950) spaced apart from the exhaust hole (730; 930) in a direction where combustion gas is discharged through the exhaust hole (730; 930), the cover part (750, 950) is disposed directly above the exhaust hole (730; 930), and the cover part (750, 950) has a plate shape with a size corresponding to the size of the exhaust hole (730, 930),
wherein fixing ribs (751, 951) are provided at front and rear end portions of each cover part (750, 950), and
wherein the fixing ribs (751, 951) are provided to fix the cover part (750, 950) to the reflection part (710, 910).

2. The gas oven range according to claim 1, wherein the reflector (600; 700; 800; 900) divides the oven chamber (211) into a combustion space (215) in which gas is burned by the burner (500) and an exhaust space (213) to which combustion gas generated by combustion of gas at the burner (500) is discharged.

3. A reflector to be disposed above a burner for reflecting flame and heat generated by combustion of gas at the burner disposed in an oven chamber, the reflector comprising:
a reflection part (610; 710; 810; 910) configured to reflect flame and heat generated by combustion of gas at a burner (500); and
an exhaust hole (620; 730; 830; 930) configured to discharge combustion gas generated by combustion of gas at the burner (500) toward a side opposite to the burner (500);
**characterized by**
a cover part (750; 950) spaced apart from the exhaust hole (730; 930) in a direction where combustion gas is discharged through the exhaust hole (730; 930), the cover part (750; 950) is disposed directly above the exhaust hole (730; 930), and the cover part (750, 950) has a plate shape with a size corresponding to the size of the exhaust hole (730, 930),
wherein fixing ribs (751, 951) are provided at front and rear end portions of each cover part (750, 950), and
wherein the fixing ribs (751, 951) are provided to fix the cover part (750, 950) to the reflection part (710, 910).

4. The reflector according to claim 3, further comprising a structure for preventing flame and heat generated by combustion of gas at the burner (500) from leaking upward through gaps between both lateral end portions of the reflection part (810; 910) and lateral surfaces of the oven chamber (211).

5. The reflector according to claim 4, wherein the structure for preventing flame and heat from leaking upward comprises compartment parts (820; 920) extending from both sides of the reflection part (810; 910) to positions close to or contacting lateral surfaces of the oven chamber (211).

6. The reflector according to any one of the claims 4 to 5, wherein the gaps between the lateral end portions of the compartment parts (820; 920) and the lateral surfaces of the oven chamber (211) are smaller than a width of the exhaust hole (830; 930) measured in the same direction.

7. The reflector according to any one of the claims 3 to 6, wherein the exhaust hole (620; 720; 820; 920) is formed by cutting out the reflection part (610; 710; 810; 910) partially.

8. The reflector according to claim 7, wherein the exhaust hole (830; 930) is formed by cutting out the compartment part (820; 920) partially.

9. The reflector according to claim 3, wherein the cover part (750; 950) is a separate part fixed to the reflection part (710; 910), or the cover part and the reflection part are formed in one piece.

10. The reflector according to any one of the claims 3 to 9, wherein the reflection part (610) comprises:
at least one first connection part (611) to be located above a combustion part (510) of the burner (500); and
at least two oblique parts (613) extending from both sides of the first connection part (611) in a direction opposite to the burner (500).

11. The reflector according to claim 8, wherein the reflection part (610) further comprises a second connection part (615) configured to connect neighboring oblique parts (613).

12. The reflector according to any one of the claims 3 to 11, wherein a fixing flange (640; 740; 840; 940) configured to fix the reflection part (610; 710; 810; 910) within an oven chamber is formed by bending a portion of the reflection part.

## Patentansprüche

1. Gasherd, der Folgendes umfasst:
eine Ofenkammer (211), in der Lebensmittel gekocht werden;
einen oberen Brenner (500) in der Ofenkammer (211); und
einen Reflektor (600; 700; 800; 900), der über dem Brenner (500) angeordnet ist,
wobei der Reflektor Folgendes umfasst:
ein Reflexionsteil (610; 710; 810; 910), das konfiguriert ist, eine Flamme und Hitze, die durch Verbrennen von Gas bei dem Brenner (500) erzeugt wird, zu reflektieren, und
ein Abluftloch (620; 730; 830; 930), das konfiguriert ist, Verbrennungsgas, das durch Verbrennen von Gas bei dem Brenner (500) erzeugt wird, in Richtung einer Seite gegenüber dem Brenner (500) abzuführen;
**gekennzeichnet durch**
ein Abdeckteil (750; 950), das von dem Abluftloch (730; 930) in einer Richtung, in der Verbrennungsgas durch das Abluftloch (730; 930) abgeführt wird, beabstandet ist, wobei das Abdeckteil (750, 950) direkt über dem Abluftloch (730; 930) angeordnet ist und wobei das Abdeckteil (750, 950) eine Plattenform mit einer Größe entsprechend der Größe des Abluftlochs (730, 930) aufweist,
wobei Befestigungsrippen (751, 951) an einem vorderen und hinteren Endabschnitt jedes Abdeckteils (750, 950) vorgesehen sind, und
wobei die Befestigungsrippen (751, 951) vorgesehen sind, um das Abdeckteil (750, 950) an dem Reflexionsteil (710, 910) zu befestigen.

2. Gasherd nach Anspruch 1, wobei der Reflektor (600; 700; 800; 900) die Ofenkammer (211) in einen Brennraum (215), in dem Gas durch den Brenner (500) verbrannt wird, und einen Abluftraum (213), zu dem Verbrennungsgas abgeführt wird, das durch Verbrennen von Gas bei dem Brenner (500) erzeugt wird, unterteilt.

3. Reflektor, der über einem Brenner angeordnet ist, um eine Flamme und Hitze, die durch Verbrennen von Gas bei dem Brenner, der in einer Ofenkammer angeordnet ist, erzeugt wird, zu reflektieren, wobei der Reflektor Folgendes umfasst:
ein Reflexionsteil (610; 710; 810; 910), das konfiguriert ist, eine Flamme und Hitze, die durch Verbrennen von Gas bei einem Brenner (500) erzeugt wird, zu reflektieren; und
ein Abluftloch (620; 730; 830; 930), das konfiguriert ist, Verbrennungsgas, das durch Verbrennen von Gas bei dem Brenner (500) erzeugt wird, zu einer Seite gegenüber dem Brenner (500) abzuführen;
**gekennzeichnet durch**
ein Abdeckteil (750; 950), das von dem Abluftloch (730; 930) in einer Richtung, in der Verbrennungsgas durch das Abluftloch (730; 930) abgeführt wird, beabstandet ist, wobei das Abdeckteil (750; 950) direkt über dem Abluftloch (730; 930) angeordnet ist und wobei das Abdeckteil (750, 950) eine Plattenform mit einer Größe entsprechend der Größe des Abluftlochs (730, 930) aufweist,
wobei Befestigungsrippen (751, 951) an einem vorderen und hinteren Endabschnitt jedes Abdeckteils (750, 950) vorgesehen sind, und
wobei die Befestigungsrippen (751, 951) vorgesehen sind, um das Abdeckteil (750, 950) an dem Reflexionsteil (710, 910) zu befestigen.

4. Reflektor nach Anspruch 3, der ferner einen Aufbau umfasst, der verhindert, dass eine Flamme und Hitze, die durch Verbrennen von Gas bei dem Brenner (500) erzeugt wird, durch Lücken zwischen beiden seitlichen Endabschnitten des Reflexionsteils (810; 910) und seitlichen Oberflächen der Ofenkammer (211) nach oben austreten.

5. Reflektor nach Anspruch 4, wobei der Aufbau, der verhindert, dass eine Flamme und Hitze nach oben austreten, Abschottungen (820; 920) umfasst, die sich von beiden Seiten des Reflexionsteils (810; 910) zu Positionen erstrecken, die direkt an seitlichen Oberflächen der Ofenkammer (211) liegen oder mit diesen in Kontakt sind.

6. Reflektor nach einem der Ansprüche 4 bis 5, wobei die Lücken zwischen den seitlichen Endabschnitten der Abschottungen (820; 920) und den seitlichen Oberflächen der Ofenkammer (211) schmaler als eine Breite des Abluftlochs (830; 930) in der gleichen Richtung sind.

7. Reflektor nach einem der Ansprüche 3 bis 6, wobei das Abluftloch (620; 720; 820; 920) durch teilweises Ausschneiden des Reflexionsteils (610; 710; 810; 910) gebildet wird.

8. Reflektor nach Anspruch 7, wobei das Abluftloch (830; 930) durch teilweises Ausschneiden der Abschottung (820; 920) gebildet wird.

9. Reflektor nach Anspruch 3, wobei das Abdeckteil (750; 950) ein getrenntes Teil ist, das an dem Reflexionsteil (710; 910) befestigt ist, oder wobei das Abdeckteil und das Reflexionsteil einteilig ausgebildet sind.

10. Reflektor nach einem der Ansprüche 3 bis 9, wobei das Reflexionsteils (610) Folgendes umfasst:
wenigstens ein erstes Verbindungsteil (611), das über einem Brennteil (510) des Brenners (500) angeordnet ist; und
wenigstes zwei schräge Teile (613), die sich von beiden Seiten des ersten Verbindungsteils (611) in einer Richtung entgegengesetzt zu dem Brenner (500) erstrecken.

11. Reflektor nach Anspruch 8, wobei das Reflexionsteil (610) ferner ein zweites Verbindungsteil (615) umfasst, das konfiguriert ist, benachbarte schräge Teile (613) zu verbinden.

12. Reflektor nach einem der Ansprüche 3 bis 11, wobei ein Fixierflansch (640; 740; 840; 940), der konfiguriert ist, das Reflexionsteil (610; 710; 810; 910) in einer Ofenkammer zu fixieren, durch Biegen eines Abschnitts des Reflexionsteils gebildet wird.

## Revendications

1. Cuisinière à four à gaz comprenant :
une chambre de four (211) dans laquelle de la nourriture est cuite ;
un brûleur supérieur (500) à l'intérieur de la chambre de four (211) ; et
un réflecteur (600, 700 ; 800 ; 900) disposé au-dessus du brûleur (500) ;
le réflecteur comprenant
une partie réfléchissante (610 ; 710 ; 810 ; 910) configurée pour réfléchir la flamme et la chaleur générées par la combustion du gaz au niveau du brûleur (500), et
un trou d'échappement (620 ; 730 ; 830, 930) configuré pour évacuer le gaz de combustion généré par la combustion du gaz au niveau du brûleur (500) en direction d'un côté opposé au brûleur (500) ;
**caractérisé par**
une partie couvrante (750 ; 950) distante du trou d'échappement (730 ; 930) dans une direction où le gaz de combustion est évacué à travers le trou d'échappement (730 ; 930), la partie couvrante (750, 950) étant disposée directement au-dessus du trou d'échappement (730 ; 930), et la partie couvrante (750, 950) ayant une forme de plaque d'une taille correspondant à la taille du trou d'échappement (730, 930),
dans lequel des nervures de fixation (751, 951) sont prévues au niveau de portions terminales avant et arrière de chaque partie couvrante (750, 950), et
dans lequel les nervures de fixation (751, 951) sont prévues pour fixer la partie couvrante (750, 950) à la partie réfléchissante (710, 910).

2. Cuisinière à four à gaz selon la revendication 1, dans lequel le réflecteur (600 ; 700 ; 800 ; 900) divise la chambre de four (211) en un espace de combustion (215) dans lequel du gaz est brûlé par le brûleur (500) et un espace d'échappement (213) vers lequel est évacué le gaz de combustion généré par la combustion du gaz au niveau du brûleur (500).

3. Réflecteur prévu pour être disposé au-dessus d'un brûleur pour réfléchir la flamme et la chaleur générées par la combustion de gaz au niveau du brûleur (500) disposé dans une chambre de four, le réflecteur comprenant :
une partie réfléchissante (610 ; 710 ; 810 ; 910) configurée pour réfléchir la flamme et la chaleur générées par la combustion de gaz au niveau d'un brûleur (500) ; et
un trou d'échappement (620 ; 730 ; 830 ; 930) configuré pour évacuer le gaz de combustion généré par la combustion du gaz au niveau du brûleur (500) en direction d'un côté opposé au brûleur (500) ;
**caractérisé par**
une partie couvrante (750 ; 950) distante du trou d'échappement (730 ; 930) dans une direction où le gaz de combustion est évacué à travers le trou d'échappement (730 ; 930), la partie couvrante (750, 950) étant disposée directement au-dessus du trou d'échappement (730 ; 930), et la partie couvrante (750, 950) ayant une forme de plaque d'une taille correspondant à la taille du trou d'échappement (730, 930),
dans lequel des nervures de fixation (751, 951) sont prévues au niveau de portions terminales avant et arrière de chaque partie couvrante (750, 950), et
dans lequel les nervures de fixation (751, 951) sont prévues pour fixer la partie couvrante (750, 950) à la partie réfléchissante (710, 910).

4. Réflecteur selon la revendication 3, comprenant en outre une structure pour empêcher la flamme et la chaleur générées par le gaz de combustion au niveau du brûleur (500) de fuir vers le haut à travers des intervalles entre les deux portions terminales latérales de la partie réfléchissante (810; 910) et des surfaces latérales de la chambre de four (211).

5. Réflecteur selon la revendication 4, dans lequel la structure pour empêcher la flamme et la chaleur de fuir vers le haut comprend des parties de compartiment (820 ; 920) s'étendant depuis les deux côtés de la partie réfléchissante (810 ; 910) vers des positions proches ou en contact avec des surfaces latérales de la chambre de four (211).

6. Réflecteur selon l'une quelconque des revendications 4 à 5, dans lequel les intervalles entre les portions terminales latérales des parties de compartiment (820 ; 920) et les surfaces latérales de la chambre de four (211) sont plus petits qu'une largeur du trou d'échappement (830 ; 930) mesurée dans la même direction.

7. Réflecteur selon l'une quelconque des revendications 3 à 6, dans lequel le trou d'échappement (620 ; 720 ; 820 ; 920) est formé en découpant partiellement la portion réfléchissante (610 ; 710 ; 810 ; 910).

8. Réflecteur selon la revendication 7, dans lequel le trou d'échappement (830 ; 930) est formé en découpant partiellement la partie de compartiment (820 ; 920).

9. Réflecteur selon la revendication 3, dans lequel la partie couvrante (750 ; 950) est une partie séparée fixée à la partie réfléchissante (710 ; 910), ou la partie couvrante et la partie réfléchissante sont formées d'une seule pièce.

10. Réflecteur selon l'une quelconque des revendications 3 à 9, dans lequel la partie réfléchissante (610) comprend :
au moins une première partie de connexion (611) prévue pour être située au-dessus d'une partie de combustion (510) du brûleur (500) ; et
au moins deux parties obliques (613) s'étendant depuis les deux côtés de la première partie de connexion (611) dans une direction opposée au brûleur (500).

11. Réflecteur selon la revendication 8, dans lequel la partie réfléchissante (610) comprend en outre une deuxième partie de connexion (615) configurée pour relier les parties obliques voisines (613).

12. Réflecteur selon l'une quelconque des revendications 3 à 11, dans lequel une bride de fixation (640 ; 740 ; 840 ; 940) configurée pour fixer la partie réfléchissante (610 ; 710 ; 810 ; 910) à l'intérieur d'une chambre de four est formée en incurvant une portion de la partie réfléchissante.
